# EUROPEAN PATENT APPLICATION

(11) **EP 3 663 436 A1**
(43) Date of publication of application: **10.06.2020**
(21) Application number: 18210342.4
(22) Date of filing: 05.12.2018
(51) Int. Cl.: C23C 24/08, C23C 18/16, C23C 24/02, F16B 2/00

(54) **CONNECTING ELEMENT FOR THE FRICTION-INCREASING CONNECTION OF COMPONENTS, PROCESS FOR MAKING A CONNECTING ELEMENT AND USE OF A CONNECTING ELEMENT**

(71) Applicant: 3M Innovative Properties Company, Saint Paul, MN 55133-3427 (US)
(72) Inventor: Grimm, Florian, 87439 Kempten (DE); Rendtel, Andreas, 87435 Kempten (DE)
(74) Representative: Mössner, Brigitte

(57) **Abstract**

The present disclosure relates to a connecting element and to a process for producing said connecting element.

The present disclosure further relates to the use of said connecting element for friction-increasing connection of components to be joined in machine, plant and motor vehicle construction and energy generation.

## Description

### Technical Field

The present disclosure relates to a connecting element for the friction-increasing connection of components to be joined.

### Background

Force-locked connections are frequently used in all areas of machine, plant and motor vehicle construction and energy generation for the transmission of forces or torques. The amount of force that can be transmitted depends not only on the structural design but also primarily on the static friction value (coefficient of static friction) of the component surfaces connected to one another. Therefore, in the case of such force-locked connections, it is endeavored to provide friction-increasing measures that allow the greatest possible transverse forces and torques to be transmitted safely. Further, force-locked connections may also be referred to as non-positive connections or frictional connections.

It is known to use friction-increasing interlayers to increase the holding forces or increase the torques than can be transmitted in bolted and clamped connections. US 6,347,905 B1 discloses a connecting element for the friction-increasing play-free reversible connection of components to be joined. The connecting element comprises a spring-elastic steel foil which bears on its surface particles of a defined size, which are fixed on the spring-elastic foil by means of a binder phase. The particles consist of a hard material, preferably of diamond, cubic boron nitride, aluminum oxide, silicon carbide or boron carbide. By using this separate connecting element, the coefficient of static friction can be increased in frictional connections.

For many bolted or clamped connections, the components to be joined need to be prevented from corrosion. This is particularly needed if vehicles or machines are used in corrosive environments, or if the bolted parts consist of different materials, for example carbon steel and aluminum. These connections need to be prevented from fretting or electrochemical corrosion, and the surface of the parts to be joined should not be damaged to allow a reversible connection of the parts.

The parts or components to be joined in bolted connections often are pre-assembled before they are finally bolted together or need to be disassembled and assembled several times. In these applications, but also if no pre-assembling step is carried out before assembly and if connections are not re-assembled, it is essential that there are no loose hard particles as these particles might create problems in the engine or in other components.

Therefore, there is a need to further improve frictional connections of components with respect to friction coefficient, corrosion resistance and particle fixation.

### Summary

In a first aspect, the present disclosure relates to a connecting element, comprising a metal substrate having a first joining surface on one side of the substrate and a second joining surface on an opposite side of the substrate, wherein each joining surface comprises hard particles fixed on the metal substrate by a metallic binder layer, and wherein the mean particle size (d₅₀) of the hard particles is at least 35 µm, and wherein the thickness of the metallic binder layer is at least 60% of the mean particle size (d₅₀) of the hard particles.

In another aspect, the present disclosure also relates to a process for producing such a connecting element, comprising
providing a metal substrate having a first joining surface on one side of the substrate and a second joining surface on an opposite side of the substrate,
providing hard particles with a mean particle size (d₅₀) of at least 35 µm, and
fixing the hard particles on the first and the second joining surface with a metallic binder layer, wherein the thickness of the metallic binder layer is at least 60% of the mean particle size (d₅₀) of the hard particles, and wherein the hard particles are protruding from the metallic binder layer by at least 10% and by at most 40% of the mean particle size (d₅₀) of the hard particles.

In yet a further aspect, the present disclosure relates to a process for frictionally-coupling first and a second component, the process comprising
providing a connecting element as disclosed herein,
providing a first component with a component joining surface and a second component with a component joining surface,
pressing the hard particles of the first joining surface of the connecting element into the component joining surface of the first component, and
pressing the hard particles of the second joining surface of the connecting element into the component joining surface of the second component,
thereby frictionally-coupling the first component and the second component with the connecting element.

In yet a further aspect, the present disclosure also relates to a frictional connection comprising a first component having a component joining surface, a second component having a component joining surface, and a connecting element as disclosed herein, wherein the first and second component are frictionally joined with the connecting element.

In yet a further aspect, the present disclosure also relates to the use of such a connecting element to connect a first component and a second component to be joined in machine, plant and motor vehicle construction and energy generation.

In some embodiments, the connecting element according to the present disclosure is significantly less susceptible to corrosion than the connecting element disclosed in US 6,347,905 B1. Specifically, the connecting element according to the present disclosure is significantly less susceptible to corrosion with respect to moisture, water or any other wet environment.

In some embodiments, the connecting element according to the present disclosure is suitable for frictional connections where electrochemical corrosion is a problem as well as fretting.

In some embodiments, in the connecting element according to the present disclosure, the hard particles are prevented from being torn out of the metallic binder layer even in the presence of rotational forces of a frictional connection. No hard particles will be torn out of the metallic binder layer even under conditions of slippage. Therefore, the connecting element disclosed herein can be used in connections that need pre-assembling or that need to be disassembled and assembled several times or that are prone to even minor slippage.

By using a connecting element according to the present disclosure, the coefficient of static friction of frictional connections is increased.

### Detailed Description

The hard particles preferably consist of a material which, under the particular conditions of use, does not react chemically either with the materials of the components to be joined or with environmental media. It is preferably an inorganic material.

Preferably, the hard particles are selected from the group consisting of carbides, nitrides, borides, silicon dioxide, aluminum oxide, diamond and mixtures thereof. Examples of carbides are silicon carbide, tungsten carbide and boron carbide, examples of nitrides are silicon nitride and cubic boron nitride. Preferably, diamonds are used as hard particles.

The size of the hard particles is selected in such a way that a sufficient number of particles will interact with the joining surfaces of the components to be joined by being pressed into the surface. Preferably, this is ensured if the particle diameter is greater than two times the peak-to-valley height of the joining surfaces, which peak-to-valley results from machining of the joining surfaces. A mean particle size of 100 µm (d₅₀) or less generally fulfils this requirement. Many machined joining surfaces exhibit peak-to-valley heights larger than 12 µm. For such joining surfaces the mean particle size (d₅₀) of the hard particles may be at least 35 µm. The hard particles may have a mean particle size (d₅₀) from 35 to 100 µm. In some embodiments, the hard particles may have a mean particle size (d₅₀) from 35 to 60 µm. The mean particle size can be measured by laser diffraction (e.g. Mastersizer, wet dispersion).

The hard particles should have a narrow grain size range in which the scatter about a given nominal diameter amounts to no more than about +/- 50%. In some embodiments, the scatter about a given nominal diameter should not amount to more than about +/-25%.

The thickness of the metallic binder layer is at least 60% of the mean particle size (d₅₀) of the hard particles. In some embodiments, the thickness of the metallic binder layer is 60% of the mean particle size (d₅₀) of the hard particles. In some embodiments, the thickness of the metallic binder layer is more than 60% of the mean particle size (d₅₀) of the hard particles. The thickness of the metallic binder layer may be at least 65%, or at least 70%, or at least 75%, of the mean particle size (d₅₀) of the hard particles. In some embodiments, the thickness of the metallic binder layer is more than 65%, or more than 70%, or more than 75% of the mean particle size (d₅₀) of the hard particles.

In some embodiments, the thickness of the metallic binder layer is at most 80% of the mean particle size (d₅₀) of the hard particles. In some embodiments, the thickness of the metallic binder layer is at most 95% of the mean particle size (d₅₀) of the hard particles.

In some embodiments, the thickness of the metallic binder layer is at least 60% and at most 80% of the mean particle size (d₅₀) of the hard particles, or at least 60% and at most 95% of the mean particle size (d₅₀) of the hard particles. In some embodiments, the thickness of the metallic binder layer is at least 60% and at most 70% of the mean particle size (d₅₀) of the hard particles. In some other embodiments, the thickness of the metallic binder layer is at least 70% and at most 80% of the mean particle size (d₅₀) of the hard particles. A thickness of the metallic binder layer of at least 70% of the mean particle size (d₅₀) of the hard particles may be advantageous for achieving a high corrosion resistance of the connecting element against moisture, water or any other wet environment, and resistance against fretting and electrochemical corrosion.

The hard particles may be protruding from the metallic binder layer by at most 40% of the mean particle size (d₅₀) of the hard particles. In some embodiments, the hard particles are protruding from the metallic binder layer by at most 35%, or by at most 30%, or by at most 25%, or by at most 20% of the mean particle size (d₅₀) of the hard particles.

The hard particles may be protruding from the metallic binder layer by at least 5% of the mean particle size (d₅₀) of the hard particles. In some embodiments, the hard particles are protruding from the metallic binder layer by at least 10%, at least 15%, or by at least 20%, or by at least 25%, or by at least 30%, or by at least 35% of the mean particle size (d₅₀) of the hard particles.

The height of the hard particles protruding from the metallic binder layer can be calculated by subtracting the thickness of the metallic binder layer from the mean particle size (d₅₀) of the hard particles.

The number of hard particles per unit surface area of the joining surfaces of the connecting element may be selected in such a way that the normal force which is available for joining the components together is sufficient to ensure that the particles are pressed into the surface of the components to be joined. This will generally be the case if the area percentage of the joining surfaces of the connecting element which is covered with hard particles is from 10% to 80%. The area percentage of the joining surfaces of the connecting element which is covered with hard particles may be selected dependent on the mean particle size (d₅₀) of the hard particles. For example, for a mean particle size (d₅₀) of the hard particles of 35 µm from about 15% to 60% of the joining surfaces of the connecting element may be covered with hard particles, for a mean particle size (d₅₀) of 55 µm the area percentage may be from about 20% to 70%, and for a mean particle size (d₅₀) of 75 µm the area percentage may be from about 25% to 80%.

The thickness of the metal substrate is selected depending on the application. In some embodiments, the thickness of the metal substrate is up to 2.0 mm. In other embodiments, the thickness is up to 1.0 or up to 0.5 mm. In some other embodiments, the thickness is up to 0.2 mm, in some other embodiments, the thickness is up to 0.1 mm. For large connecting elements that need to have higher strength and stiffness, for example connecting elements used for parts of wind turbines, the thickness of the metal substrate can be up to 0.5 mm or up to 1.0 mm or up to 2.0 mm. For applications that require a thin connecting element, for example if the design of the components to be joined should not be changed, the thickness of the metal substrate can be 0.2 mm or less, preferably 0.1 mm.

The metal substrate may be made from steel, for example from unalloyed steel. Also high-alloy steel or stainless steel can be used. Examples for unalloyed steel are grade C75S - 1.1248 according to DIN EN 10132-4 or grade C60S -1.1211 according to DIN EN 10132-4.

The metallic binder layer may comprise nickel.

The connecting element disclosed herein may be ring-shaped. The ring-shaped connecting element may be a single piece or may be a segmented ring.

The connecting element as disclosed herein can be produced by a process comprising:
providing a metal substrate having a first joining surface on one side of the substrate and a second joining surface on an opposite side of the substrate,
providing hard particles with a mean particle size (d₅₀) of at least 35 µm, and
fixing the hard particles on the first and the second joining surface with a metallic binder layer, wherein the thickness of the metallic binder layer is at least 60% of the mean particle size (d₅₀) of the hard particles, and wherein the hard particles are protruding from the metallic binder layer by at least 10% and by at most 40% of the mean particle size (d₅₀) of the hard particles.

The metallic binder layer may comprise nickel. The metallic binder layer may be produced by means of an electrodeposition process, for example by an external current-free (= chemical) electroplating process, also called electroless plating process, preferably by an electroless nickel plating process. The hard particles may be applied on the joining surfaces of the metal substrate by means of an electrodeposition process, for example by an electroless nickel plating process, using a chemical nickel bath with dispersed hard particles. Such electrodeposition and electroplating processes are customary in coating technology. The chemical nickel layer can be hardened by means of a heat treatment at up to about 400 °C, with the result that the adhesion to the metal substrate is improved and the inherent hardness of the layer is increased. The hard particles are fixed on the metal substrate by means of the metallic binder layer.

The step of fixing the hard particles on the first and the second joining surface with a metallic binder layer may comprise
fixing the hard particles on the first and the second joining surface with a first layer of the metallic binder layer, wherein the thickness of the first layer is at least 5% of the mean particle size (d₅₀) of the hard particles, and
embedding the hard particles on the first and the second joining surface with a second layer of the metallic binder layer, wherein the thickness of the second layer is at least 55% of the mean particle size (d₅₀) of the hard particles.

The step of fixing the hard particles with a first layer of the metallic binder layer may be accomplished by a first electrodeposition or electroplating process, using a chemical nickel bath with dispersed hard particles. The step of embedding the hard particles with a second layer of the metallic binder layer may be accomplished by a second electrodeposition or electroplating process, using a chemical nickel bath without dispersed hard particles.

The connecting element as disclosed herein is used in a process for frictionally-coupling a first component and a second component, the process comprising
providing a connecting element as disclosed herein,
providing a first component with a component joining surface and a second component with a component joining surface,
pressing the hard particles of the first joining surface of the connecting element into the component joining surface of the first component, and
pressing the hard particles of the second joining surface of the connecting element into the component joining surface of the second component,
thereby frictionally-coupling the first component and the second component with the connecting element.

The first joining surface of the connecting element is brought into close contact with the component joining surface of the first component, and the second joining surface of the connecting element is brought into close contact with the component joining surface of the second component, and the first and second component are mechanically connected with one another, for example with screws. The hard particles of the first joining surface are pressed into the component joining surface of the first component, and the hard particles of the second joining surface of the connecting element are pressed into the component joining surface of the second component, thereby frictionally-coupling the first component and the second component with the connecting element.

The present disclosure also relates to a frictional connection comprising a first component having a component joining surface, a second component having a component joining surface, and a connecting element as disclosed herein, wherein the first and second component are frictionally joined with the connecting element.

The connecting element disclosed herein can be used to connect a first component and a second component to be joined in machine, plant and motor vehicle construction and energy generation. The connecting element disclosed herein can be used for friction-increasing connection of a first component and a second component to be joined in machine, plant and motor vehicle construction and energy generation. The connecting element disclosed herein can be used for friction-increasing, play-free and/or reversible connection of a first and a second component to be joined in machine, plant and motor vehicle construction and energy generation.

In principle, the connecting element disclosed herein can be used in any type of frictional connection throughout the field of mechanical engineering, and in particular, if the forces which can be transmitted by the component surfaces which are imposed by the design are insufficient.

For example, the connecting element disclosed herein can be used for frictional connections, such as bolted or clamped connections, between parts or components of vehicles, such as subframe and undercarriage, or crankshaft and sprocket, or in camshaft applications, or axle or damper applications, or between parts or components of wind turbines, such as segmented towers or rotor hub and rotor shaft.

The present disclosure will be described in more detail by the following examples.

### Examples

### Examples 1 and 2 (EX1, EX2) and Comparative Examples 1 to 3 (CEX1, CEX2, CEX3)

### Production of a connecting element (as used for Examples 1 and 2 and Comparative Examples 1 to 3)

For the production of a connecting element, a ring-shaped steel foil (grade C75S - 1.1248 according to DIN EN 10132-4) with a thickness of 0.1 mm, an outer diameter of 30 mm and an inner diameter of 15 mm is coated on both joining surfaces by electroless plating with a nickel layer and diamonds with a mean particle size (d₅₀) of 75 µm. As used herein, the ring-shaped steel foils are also referred to as "shims".

For electroless nickel plating, the shims are placed on suitable racks and are pretreated in accordance with the general rules of electroless nickel plating by degreasing, pickling and activating. Then, the carrier bearing the shims is immersed in a chemical nickel bath in which diamond powder with an average particle diameter of 75 µm is dispersed. The quantity of dispersed diamond powder is selected in such a way that under the parameters prevailing in the coating bath (bath movement, deposition rate), the desired proportion of diamond in the deposited layer of nickel is achieved and the nickel layer reaches the desired thickness. The thickness of the metallic binder layer (nickel layer) is varied as can be seen from Table 1. Under customary process conditions, the immersion time amounts to approximately 15 to 210 minutes.

The carrier comprising the shims which are now electroless nickel plated, is then removed from the chemical nickel bath and is cleaned in an ultrasonic bath, in order to remove diamond particles which are only loosely attached to the nickel layer. The cleaned shims are taken off the carrier and are subject to a heat treatment for 2 hours at a temperature of at least 150 °C. This treatment increases the adhesion of the chemical nickel layer to the steel foil and the bonding of the diamonds in the layer itself.

The area percentage of the joining surface covered with diamonds is at least 15% on both sides. The height of the diamonds protruding from the nickel layer is about 63 µm for Comparative Example 1, about 56 µm for Comparative Example 2, about 50 µm for Comparative Example 3, about 15 µm for Example 1 and about 5 µm for Example 2.

### Friction testing

The coefficient of static friction is determined by an experimental set-up in which the friction contact is produced by clamping a center steel block (steel S355) with dimensions 14 x 14 x 25 mm between two steel blocks (S355; sample 1, sample 2) with larger dimensions (30 x 30 x 25 mm) that are pressed by a defined force, representing the normal force, onto the center block. The normal force is generated using a clamping mechanism that is using at least two big screws. The contact pressure for the tests was 50 MPa.

For Examples 1 and 2 and for Comparative Examples 1 to 3, a connecting element is positioned between sample 1 and the central block and another connecting element is positioned between sample 2 and the central block. The two connecting elements are produced as described above, having a thickness of the metallic binder layer as indicated in Table 1.

The outer blocks (sample 1, sample 2) are positioned on a stiff and flat base plate. The center block is positioned centrally with respect to the outer blocks. This results in a defined distance of the center block from the base plate.

A shear test is performed by applying a compressive load on the center block from top via a piston. The compressive load is representing the friction force. The test is done using a universal testing machine (Zwick GmbH, Model 1474). The friction force is increased until the center block starts to move relative to the outer blocks (these cannot move since they are positioned on the base plate) in direction towards the base plate. The maximum movement of the center block is set to 500 µm. During the shear test normal force, friction force, and distance of the center block from the base plate are measured continuously.

The measured values of friction force and normal force are used to calculate the coefficient of friction that is defined as the ratio of friction force/normal force. The measured distance of the center block from the base plate is used to calculate the movement of the center block relative to the outer blocks. In this way, the coefficient of friction can be obtained in dependence on the measured relative movement, representing the friction behavior or the friction curve. This friction curve is used to determine characteristic values as e.g. for defined relative movements or the maximum coefficient of friction which corresponds to the maximum of the friction curve. The coefficient of static friction µ is defined as the coefficient of friction at a relative movement of 20 µm or as the maximum coefficient of friction if the relative movement at the maximum of the friction curve is below 20 µm.

The results of friction testing of Examples 1 and 2 and Comparative Examples 1 to 3 are shown in Table 1.

### Investigation if hard particles are torn out of metallic binder layer after friction test

After the friction test, an investigation was carried out if hard particles have been torn out of the metallic binder layer. This investigation was done using a digital microscope (VHX-5000, Keyence Corporation) by inspection of the surface of the shims within the contact area and by comparison with the surface of the shim outside the contact area. This comparison revealed distinct differences that allow to identify torn out particles and moved particles that produced groves on the surface of the shim in direction of the movement during the friction test. The amount of particles torn out of the metallic binder layer was assessed qualitatively.

The results of this investigation are shown in Table 1.

### Corrosion Testing

Corrosion testing was performed as neutral salt spray test according to EN ISO 9227:2017 using a commercially available test equipment (Corrosion Test Chamber Type HK400, Kohler Automobiltechnik, Lippstadt, Germany). For the test, the shims were threaded on glass-fiber reinforced plastic rods. The rods with the shims were placed in the test chamber for a duration of 168 hours. Test conditions were:
Temperature: 35 °C ± 2 °C
Concentration of sodium chloride solution: 50 g/l ± 5 g/l
pH-value: 6.5 - 7.2
Condensation rate (horizontal area, 80 cm²): 1.5 ml/h ± 0.5 ml/h

After the test the shims were rinsed with deionized water and dried in a drying cabinet at 110 °C ± 5 °C for two hours. After drying the tested shims were inspected visually.

The results of corrosion testing are shown in Table 1.

**Table 1:**

| | A | B | C | D | E |
|---|---|---|---|---|---|
| CEX1 | 12 | 16% | 0.5 | significant number of hard particles are torn out of metallic binder layer | severe corrosion on edges and on surfaces of test samples |
| CEX2 | 19 | 25% | 0.7 | some hard particles are torn out of metallic binder layer | reduced corrosion on edges and on surfaces of test samples |
| CEX3 | 25 | 33% | 0.8 | very few hard particles are torn out of metallic binder layer | corrosion on edges can still be observed, reduced corrosion on surfaces of test samples |
| EX1 | 60 | 80% | 0.7 | no particles are torn out of metallic binder layer | only slight corrosion on edges, no corrosion on surfaces of test samples |
| EX2 | 70 | 93% | 0.9 | no particles are torn out of metallic binder layer | only slight corrosion on edges, no corrosion on surfaces of test samples |

| | | | | | |
|---|---|---|---|---|---|
| A: thickness of metallic binder layer [µm] B: thickness of metallic binder layer relative to mean particle size (d₅₀) of the hard particles C: coefficient of static friction µ (+/- 0.1) D: results of investigation of hard particles being torn out of metallic binder layer after friction test E: results of corrosion test | | | | | |

The examples show that a connecting element as disclosed herein can have a coefficient of static friction which is 0.6 or higher and therefore is suitable for many applications of frictional connections, and can have an improved corrosion resistance in wet environments (e.g. outdoor) and an improved fixation of the hard particles with the result that no particles are being torn out of the metallic binder layer during a friction test and when in operation. The improved corrosion resistance is important for all applications in which the frictional connections are exposed to moisture, water, or any other wet environment.

## Claims

1. A connecting element comprising a metal substrate having a first joining surface on one side of the substrate and a second joining surface on an opposite side of the substrate, wherein each joining surface comprises hard particles fixed on the metal substrate by a metallic binder layer, and wherein the mean particle size (d₅₀) of the hard particles is at least 35 µm, and wherein the thickness of the metallic binder layer is at least 60% of the mean particle size (d₅₀) of the hard particles.

2. The connecting element of claim 2, wherein the hard particles are protruding from the metallic binder layer by at most 40% of the mean particle size (d₅₀) of the hard particles.

3. The connecting element of claim 1 or 2, wherein the hard particles are protruding from the metallic binder layer by at least 5% of the mean particle size (d₅₀) of the hard particles.

4. The connecting element of any of claims 1 to 3, wherein the thickness of the metallic binder layer is at least 65%, or at least 70%, or at least 75%, of the mean particle size (d₅₀) of the hard particles.

5. The connecting element of any of claims 1 to 4, wherein the thickness of the metallic binder layer is at most 80% of the mean particle size (d₅₀) of the hard particles.

6. The connecting element of any of claims 1 to 5, wherein the thickness of the metallic binder layer is at least 60% and at most 80% of the mean particle size (d₅₀) of the hard particles.

7. The connecting element of any of claims 1 to 6, wherein the metallic binder layer comprises nickel.

8. The connecting element of any one of claims 1 to 7, wherein the hard particles are selected from the group consisting of carbides, borides, nitrides, silicon dioxide, aluminum oxide, diamond and mixtures thereof.

9. The connecting element of any one of claims 1 to 8, wherein the mean particle size (d₅₀) of the hard particles is from 35 to 100 µm.

10. The connecting element of any one of claims 1 to 9, wherein the area percentage of the first and second joining surface of the metal substrate which is covered with hard particles is from 10 to 80%.

11. A process for producing a connecting element according to any one of claims 1 to 10, comprising
providing a metal substrate having a first joining surface on one side of the substrate and a second joining surface on an opposite side of the substrate,
providing hard particles with a mean particle size (d₅₀) of at least 35 µm, and
fixing the hard particles on the first and the second joining surface with a metallic binder layer, wherein the thickness of the metallic binder layer is at least 60% of the mean particle size (d₅₀) of the hard particles, and wherein the hard particles are protruding from the metallic binder layer by at least 10% and by at most 40% of the mean particle size (d₅₀) of the hard particles.

12. The process according to claim 11, wherein the step of fixing the hard particles on the first and the second joining surface with a metallic binder layer comprises
fixing the hard particles on the first and the second joining surface with a first layer of the metallic binder layer, wherein the thickness of the first layer is at least 5% of the mean particle size (d₅₀) of the hard particles, and
embedding the hard particles on the first and the second joining surface with a second layer of the metallic binder layer, wherein the thickness of the second layer is at least 55% of the mean particle size (d₅₀) of the hard particles.

13. A process for frictionally-coupling a first and a second component, the process comprising
providing a connecting element according to any one of claims 1 to 11,
providing a first component with a component joining surface and a second component with a component joining surface,
pressing the hard particles of the first joining surface of the connecting element into the component joining surface of the first component, and
pressing the hard particles of the second joining surface of the connecting element into the component joining surface of the second component,
thereby frictionally-coupling the first component and the second component with the connecting element.

14. A frictional connection comprising a first component having a component joining surface, a second component having a component joining surface, and a connecting element according to any of claims 1 to 11, wherein the first and second component are frictionally joined with the connecting element.

15. Use of a connecting element according to any of claims 1 to 11 to connect a first component and a second component to be joined in machine, plant and motor vehicle construction and energy generation.
